# EUROPEAN PATENT SPECIFICATION

(11) **EP 3 672 978 B1**
(45) Date of publication and mention of the grant of the patent: **06.10.2021**
(21) Application number: 18755497.7
(22) Date of filing: 23.08.2018
(51) Int. Cl.: C07F 5/02

(54) **PROCESS FOR MAKING IXAZOMIB AND ITS INTERMEDIATES**
VERFAHREN ZUR HERSTELLUNG VON IXAZOMIB ODER ZWISCHENPRODUKTEN DAFÜR
PROCÉDÉ POUR LA PRÉPARATION D'IXAZOMIB OU DE SES INTERMÉDIAIRES

(30) Priority: 25.08.2017 EP 17187967
(43) Date of publication of application: 01.07.2020
(73) Proprietor: Synthon B.V., 6545 CM Nijmegen (NL)
(72) Inventor: CASTULIK, Jakub, 67817 Blansko (CZ)
(74) Representative: Mendivil Gil, Maria Dolores
(86) International application number: PCT/EP2018/072820
(87) International publication number: WO 2019/038406

(56) References cited:
- WO-A1-2009/020448
- US-A1- 2006 264 654

## Description

### BACKGROUND OF THE INVENTION

Ixazomib **1**, chemically (*R*)-(1-(2-(2,5-dichlorobenzamido)acetamido)-3-methylbutyl)boronic acid of formula **1**, is an antineoplastic agent used, in combination with Lenalidomide and Dexamethasone, for the treatment of patients with multiple myeloma. Ixazomib citrate **2**a, chemically (*R*)-2,2'-(2-(1-(2-(2,5-dichlorobenzamido)acetamido)-3-methylbutyl)-5-oxo-1,3,2-dioxaborolane-4,4-diyl)diacetic acid, is a prodrug that rapidly hydrolyzes under physiological conditions to its biologically active form, ixazomib **1**. When stored as a boronic acid, Ixazomib is frequently present in the form of its trimer **1**.trimer.

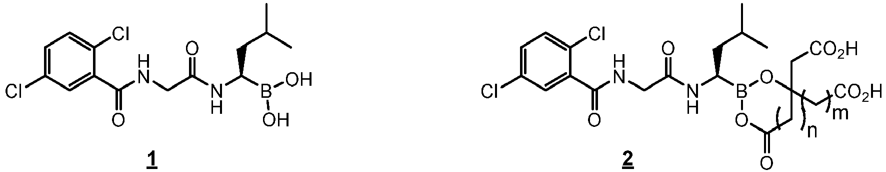

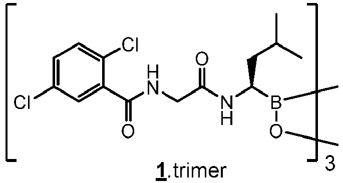

Ixazomib is a reversible proteasome inhibitor that preferentially binds and inhibits the chymotrypsin-like activity of the beta 5 subunit of the 20S proteasome. Ixazomib was first mentioned in WO2009020448A1 and its citrate in WO2009154737A1.

Synthetic processes of WO2009020448A1 follow the general schedule of scheme 1:

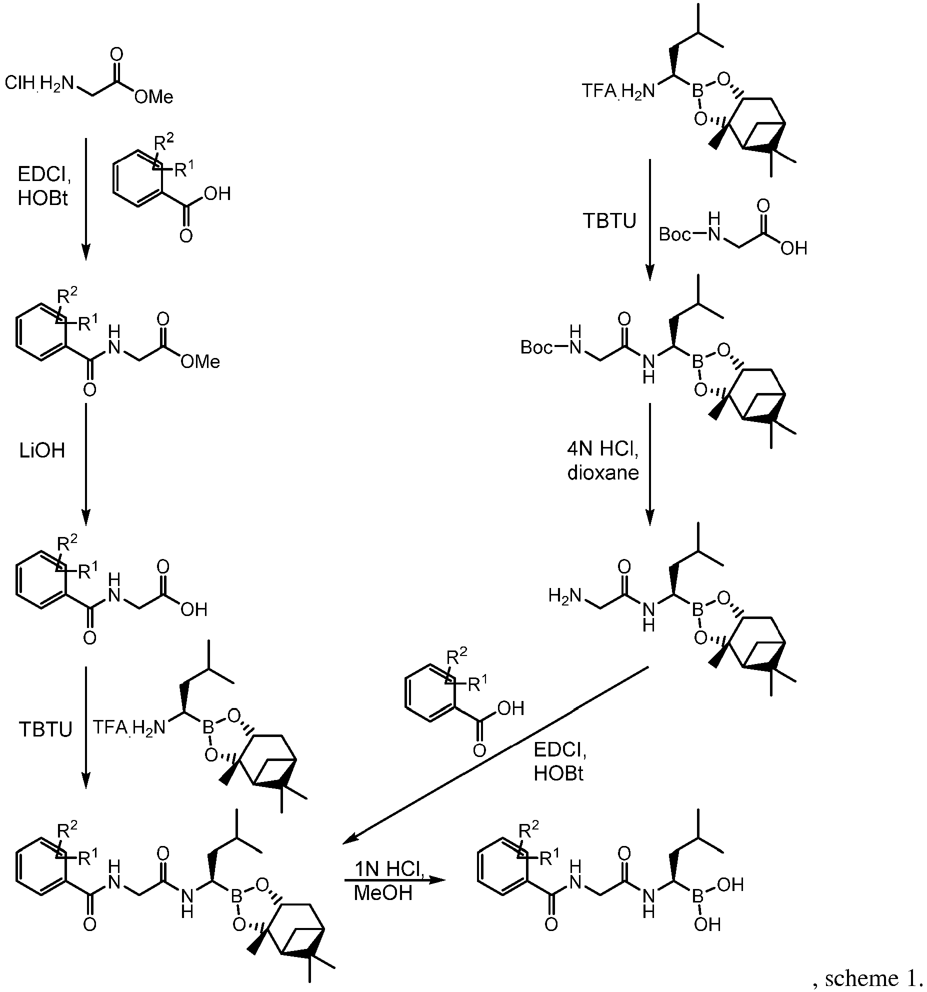

An improved procedure for preparation of Ixazomib is presented in WO2009154737A1 and follows the process as depicted in scheme 2:

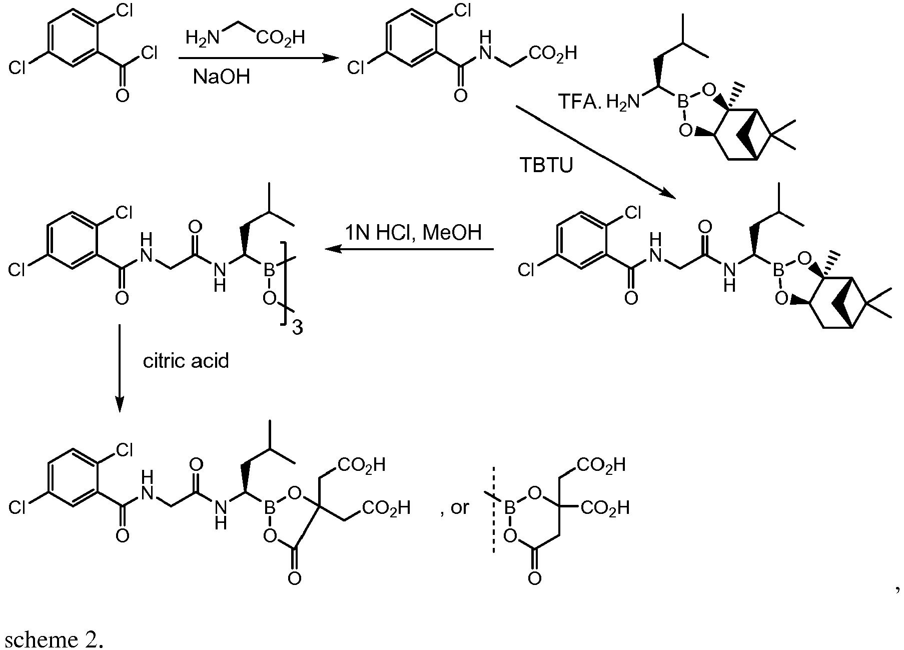

Both processes use TBTU ((O-benzotriazole-1-yl)-N,N,N',N'-tetramethyluronium tetrafluoroborate) for coupling of the aminoboronate ester moiety. WO2009020448 uses EDCI/HOBt (1-Ethyl-3-(3-dimethylaminopropyl)carbodiimide / hydroxybenzotriazole)for coupling of the 2,5-dichlorobenzoic acid moiety. The TBTU and EDCI/HOBt coupling reagents are relatively expensive reagents that need to be handled carefully due to their toxicity, generally require tedious workup procedures and bear the risk of racemisation of the reactants. In view of these and other disadvantages, there is still a need for alternative methods of preparing ixazomib or its citrate ester that result in a process better suited for scale-up to an industrial scale.

### BRIEF DESCRIPTION OF THE INVENTION

This invention relates to a process for preparing Ixazomib **1**, its trimer **1**.trimer, its citrate ester **2** for their synthesis. The process comprising at least one amide coupling reaction in the presence of a cyclic alkyl triphosphoic anhydride **9**, wherein the R¹ groups in the cyclic alkyl triphosphonic anhydride **9** are C₁-C₆ alkyl groups, preferably n-propyl groups:

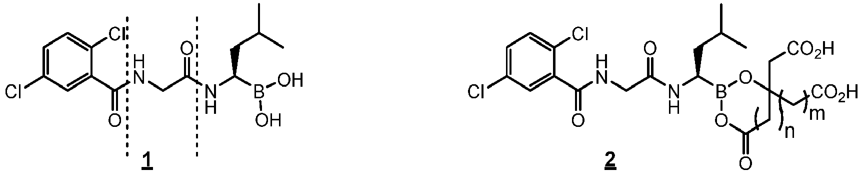

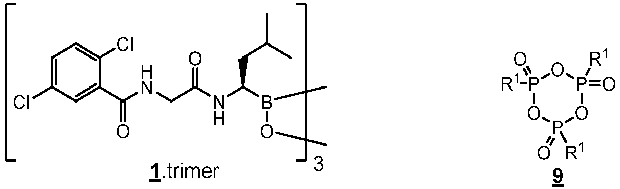

In one aspect the invention encompasses the step of coupling compounds **3a** and **7** to form compound **11**: 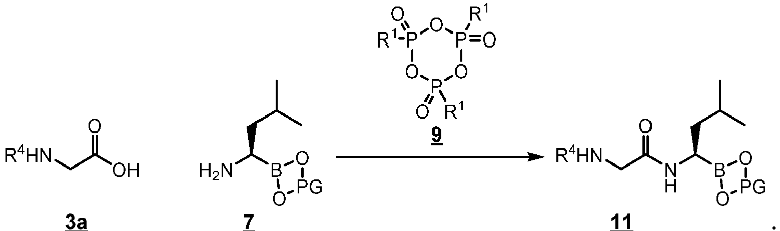 wherein:
R¹ = C₁-C₆ alkyl, preferably n-propyl;
R⁴ = nitrogen protective group or a 2,5-dichlorobenzoyl radical; if R⁴ is a nitrogen protecting group, it is preferably a *tert*.-butyloxycarbonyl (Boc) group; and
O-PG-O is a boronate protecting group, preferably a pinanediol group.

In another aspect the invention encompasses the step of coupling compounds **3b** and **8** to form compound **12**: 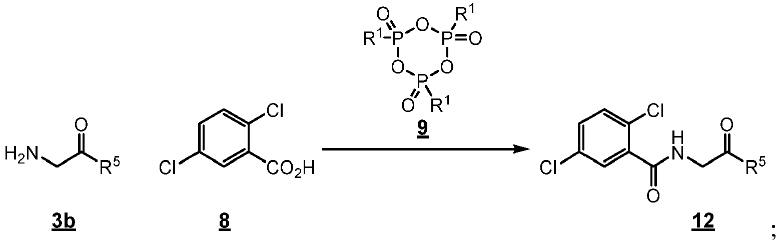 wherein:
R¹ = C₁-C₆ alkyl, preferably n-propyl; and
R⁵ = C₁₋C₄-alkoxy, benzyloxy, or a nitrogen connected 1-amino-3-methylbutylboronic acid ester.

In a further aspect of the invention the process comprises both the process step of coupling compounds **3a** and **7** to form compound **11**, and the process step of coupling compounds **3b** and **8** to form compound **12**. The skilled artisan will understand that if the reaction step of coupling compounds **3a** and **7** is executed before the reaction step of coupling compounds **3b** and **8**:
R⁴ in compound **3a** is a nitrogen protective group and not a 2,5-dichlorobenzoyl radical, and R⁵ in compound **3b** is a nitrogen connected 1-amino-3-methylbutylboronic acid ester and not a C₁₋C₄-alkoxy or benzyloxy.

The skilled artisan will also understand that if the order of execution of these two reaction steps is reversed that:
R⁴ in compound **3a** is a 2,5-dichlorobenzoyl radical and not a nitrogen protective group, and R⁵ in compound **3b** is a C₁₋C₄-alkoxy or benzyloxy and not a nitrogen connected 1-amino-3-methylbutylboronic acid ester.

The coupling reactions are preferably performed in the presence of a nitrogen base. Preferred nitrogen bases are triethylamine, diethylamine, diisopropylethylamine, morpholine, N-methylmorpholine, pyridine and 2,6-lutidine. A more preferred nitrogen base is N-methylmorpholine.

Preferred solvents for performing these reactions are halogenated solvents, preferably chloroform, dichloromethane, 1,2-dichloroethane or 1,1,1-trichloroethane, most preferably dichloromethane.

Preferred temperature for the depicted reactions in absence of a boronate (ester) group in the reactants is a temperature between 0 and 25°C, more preferably a temperature of 0-10°C, most preferably 0-5°C.

Preferred temperature for the depicted reactions in the presence of a boronate (ester) group in one of the reactants is a temperature between -20 and 0°C, more preferably a temperature of -10-0°C, most preferably -5-0°C.

It is a further aspect of this invention to use any of the mentioned preparations of intermediates according to the current invention in a process to prepare ixazomib **1** or ixazomib citrate **2**, for example by combining them with relevant further reaction steps known from the prior art or alternative steps.

### DETAILED DESCRIPTION OF THE INVENTION

The molecule of ixazomib **1** contains two amide bonds that identify three most logical fragments for coupling in a synthetic strategy:

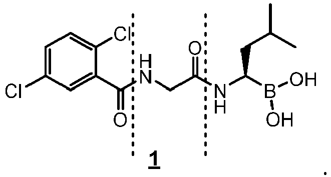

These coupling steps are generally not performed on a free boronic acid, but on protected boronic acids leading to the formation of compound 6. Since the fragment that contains the boronic acid group also carries the chiral centre of the molecule of ixazomib, it is common that the boronic acid protecting group is a chiral protecting group. A typical example of such a protecting group is the pinanediol group, other chiral boronic acid protecting groups such as chiral 1,2-dicyclohexylethane-1,2-diol (DICHED), chiral 1,2-diisopropylethane-1,2-diol (DIPED), etc are also possible candidates for protecting the boronic acid group during the synthesis of ixazomib. In the synthesis as depicted in the current invention the chiral centre is in S conformation, with proper adjustment of chiral protecting groups, it will work similarly for *R*-ixazomib and mixtures of *R* and *S* ixazomib.

Having identified the three most logical fragments for coupling in a synthetic strategy as depicted above it becomes clear that the synthesis of Ixazomib will likely contain two coupling steps to form the amide bonds that connect the three fragments. The two amide bonds can be formed in both orders with an appropriate protecting group strategy. When glycine fragment **3** is first coupled to the boronic acid carrying fragment **7**, the amino group of the glycine fragment is preferably protected by appropriate amine protecting groups known in the art (**3** R² = amino protective group, R³ = H). Typical examples of such common amino or carboxylate protective groups can be found in "Greene's Protective Groups in Organic Synthesis, Fourth Edition, by Peter G. M. Wuts, Theodora W. Greene (Print ISBN: 9780471697541; Online ISBN: 9780470053485; DOI: 10.1002/0470053488). A preferred aminoprotecting group in this case is the *tert*.-butyloxycarbonyl (Boc) protective group. In case glycine fragment **3** is first coupled to 2,5-dichlorobenzoic acid **8**, it may be protected in its carbonic acid group in the form of an ester (**3** R² = H, R³ = C₁-C₄ alkoxy, benzyloxy):

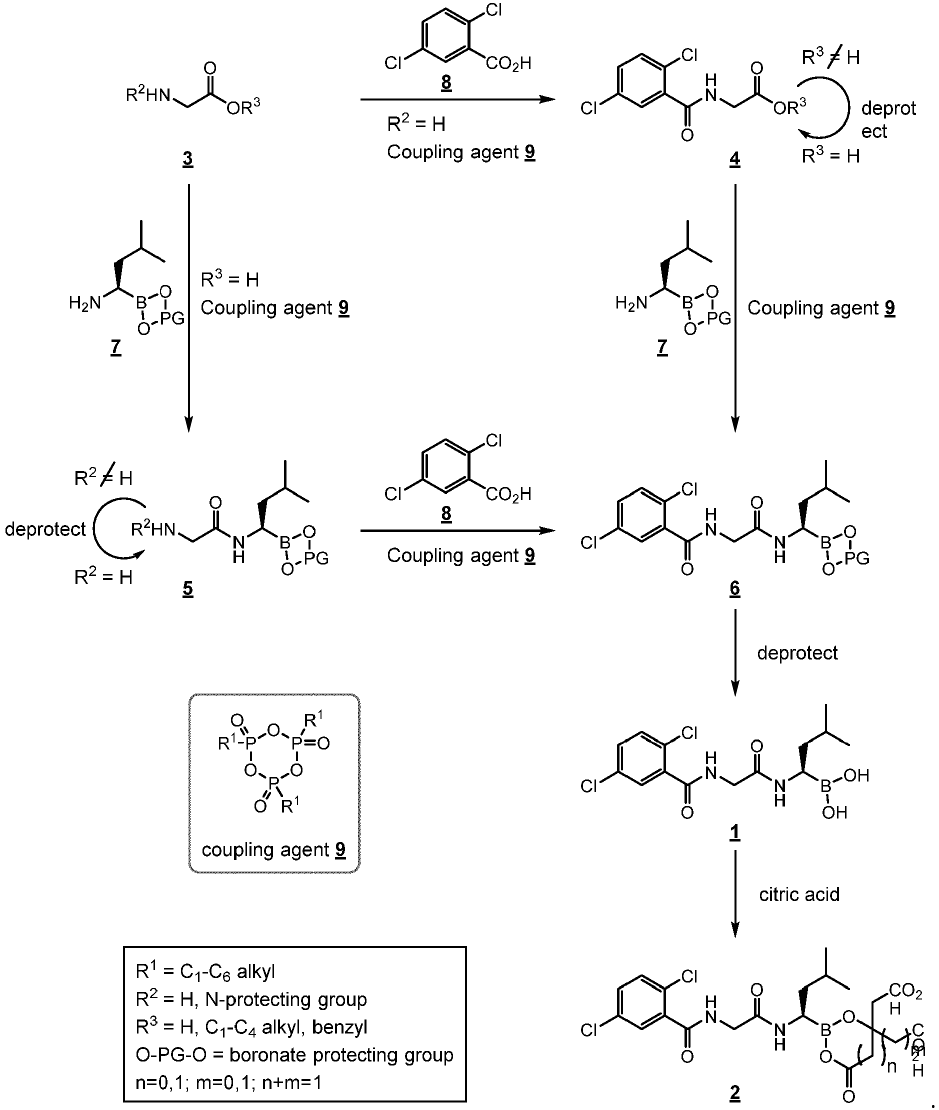

In each of the two coupling steps, the reaction partners bearing the reactive groups have rigid spatial orientation and the coupling product must maintain this orientation without racemisation or epimerization. Therefore the coupling reaction must be performed under conditions at which racemisation/epimerization is minimized. In general, such coupling reaction between an acid and amine must run in the presence of a suitable coupling agent. In the prior art documents dealing with Ixazomib chemistry, various coupling agents were used, in particular TBTU ((*O*-benzotriazole-1-yl)-*N*,*N*,*N*',*N*'-tetramethyluronium tetrafluoroborate) and EDCI (1-Ethyl-3-(3-dimethylaminopropyl)carbodiimide), typically in combination with HOBt (1-hydroxybenzotriazole).

The processes of the present invention are based on using a coupling agent of general formula **9** wherein R¹ is C₁-C₆ alkyl group. Preferably, R¹ is an n-propyl group. The compound of formula **9** is a cyclic phosphonic acid anhydride which during the amidation reaction converts into a linear triphosphate **10**. Compound **9** wherein R¹ is an n-propyl group is commercially available, e.g. under the trade name Allesan CAP and is frequently referred to by the abbreviation T3P.

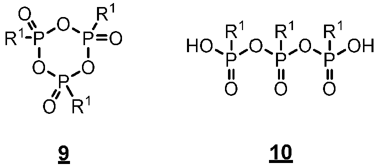

Both the cyclic **9** and the linear **10** triphosphates depicted above are well soluble in water as well as in various organic solvents and can thus be removed easily from the reaction product. These compounds are not toxic and may be handled by standard means. The amidation reaction in the presence of these triphosponic anhydrides generally proceeds at ambient and/or lower than ambient temperature, with an almost quantitative conversion. The compounds of formula **9** have been disclosed, e.g., in WO 2005/014604.

It was found that the compound of formula **9** has several remarkable advantages in comparison to other coupling reagents used in ixazomib chemistry:
1. It exhibits a minimal rate of epimerization during coupling; configuration on stereogenic centres is maintained;
2. It has very low toxicity and low sensitization potential; both TBTU and EDCI are very toxic compounds;
3. It can be removed after coupling reaction by simple washing with water. Known coupling agents and their reaction products often contaminate the product of coupling during isolation procedures which necessitates complicated purification processes;
4. It reacts at very mild conditions with high yield;
5. It has affordable price;
6. It is a stable product with easy handling and dosing, and is well soluble in common organic solvents, e.g. in ethyl acetate and/or in acetonitrile.

In an illustrative example according to the present invention, the compound of formula **7** is coupled with intermediate **4** (R³ = H) by mixing both in an appropriate inert solvent or solvent mixture in the presence of a base followed by treatment with the reagent of formula **9** to result in the formation of compound **6**. A common example of a compound of formula **7** is the compound in which O-PG-O is a pinanediol group. Compound **7** with O-PG-O being a pinanediol group is known from the prior art. It is used in both cited earlier processes for preparing ixazomib in WO2009020448 and WO2009154737. It may be used as is, or preferably, in the form of an acid addition salt. The most preferred salt is the salt with trifluoroacetic acid as it is easily preparable and crystalline. The inert solvent can be an aliphatic, cyclic or aromatic C₆-C₁₀ hydrocarbon. Alternatively it may be a C₁-C₄ halogenated hydrocarbon. Preferably the inert solvent is dichloromethane. The base is preferably a tertiary amine base, most preferably N-methylmorpholine. The reagent of formula **9** is preferably the reagent with R¹=n-propyl. Base and reagent **9** are preferably added in a cooled environment. In case one of the reactants contains a chiral centre, the preferred temperature during addition of the base and compound **9** and during completion of the reaction is between -20 and 0 °C, more preferably between -10 and 0 °C, most preferably -5-0°C.

Compound **4** (R³ = H) can be prepared from 2,5-dichlorobenzoic acid **8** and glycine methylester **3** (R² = H, R³=Me) followed by hydrolysis of the ester. This reaction can be performed using similar reagents and solvents as used in the preparation of compound **6**. The preferred temperature during addition of the reagents and completion of this reaction without any chiral centre in the reactants is between 0 and 25°C, more preferably between 0 and 10°C, most preferably between 0 and 5°C. Performing this coupling reaction in the presence of compound **9** prevents the use of a more troublesome coupling reagent as in WO2009020448, while not needing to convert 2,5-dichlorobenzoic acid **8** into its corresponding acid chloride which is necessary to prepare the same compound **4** according to the process of WO2009154737, thereby saving one process step.

In case the two amide coupling reactions are reversed in order, the reaction conditions remain the same although in this order both reactions have a reagent with a chiral centre and the preferred temperature for both reactions lies in the range between -20 and 0 °C, more preferably between -10 and 0 °C, most preferably between -5 and 0°C. In this reaction sequence the amine of glycine **3** (R³ = H) is preferably protected in the coupling reaction with compound **7**. Any common nitrogen protecting group whose removal is compatible with the chosen boronic acid protecting group can be used. A preferred protecting group for glycine in this reaction is the BOC (*tert.* butyloxycarbonyl) protecting group.

After preparation of compound **6** it can be converted into ixazomib **1**, its trimer **1**.trimer, or its citrate derivative **2** using the methods known in the art. Typical examples for such conversions are those as described in WO2009020448 and WO2009154737.

The process of this invention is illustrated in more detail by the following, non-limiting, examples.

### EXAMPLES

### Example 1

20 g of 2,5-Dichlorobenzoic acid (**8**, 105 mmol) and 15.78 g of glycine methylester hydrochloride (**3** (R²=H, R³=Me), 126 mmol) were weighed to a 3-necked 500 ml roundbottom flask under argon atmosphere. 150 ml of dichloromethane was added forming a white suspension and 46,0 ml of 4-Methylmorpholine (419 mmol) was added forming a hazy solution. The solution was cooled to 0-5°C (ice bath) and 133 g T3P (**9**, R¹=n-propyl) as a 50% solution in acetonitrile (209 mmol) was added at 0°C over 15 minutes via a dropping funnel. The mixture was stirred at 0-5°C under argon for 1.5 h and allowed to warm to 20-25°C. 200 ml of water was added affording a clear two-phase system that was stirred at 20-25°C for 10 minutes. Layers were separated and the aqueous phase was extracted with 2x50 ml of dichloromethane. Layers were separated and the organic phases were combined. The combined organic phases were washed with 50 ml of saturated aqueous NaHCO₃. The organic phase was separated and dichloromethane/acetonitrile was removed using a rotary evaporator (600 - 50 mbar, 50-60°C) yielding 26 g of crude **4** (R3=Me) as a yellow solid.

The solid yellow residue was mixed with 21.78g of sodium hydroxide (544 mmol) dissolved in 100 ml of water and 150 ml of methanol. The resulting mixture was stirred at 25°C and all solids dissolved after 30 minutes. The reaction was run until no ester was detected by HPLC (1 h) and methanol was removed in a rotary evaporator (300 - 80 mbar, 65°C) giving a white solid residue. This residue was re-dissolved in 200 ml of water and 55.5 ml of concentrated hydrochloric acid (628 mmol) was added forming a white suspension (internal temperature approximately 50°C). The suspension was cooled to 0°C and kept at this temperature for 20 minutes. The solid material was filtered off and the filter cake was washed with 2x100 ml of water. The wet product (35 g) was dried at 50°C (100 mbar, N₂ stripping) for 16 h affording 23 g of **4** (R³=H, 92 mmol, 88 % yield, 99% purity).

### Example 2

20 g of **4** (R³=H, 80 mmol) and 32.1 g of **7**.TFA (84 mmol, O-PG-O = (*S*)-pinanediol) were weighed to a 3-necked 500 ml roundbottom flask equipped with a mechanical stirrer under argon atmosphere. 200 ml of dichloromethane was added forming a white suspension that was cooled to -5°C (bath -10°C) while stirring (320 rpm, IKA eurostar 40, 7 cm blade stirrer). 35.1 ml of N-methylmorpholine (319 mmol) was added at -5°C giving a hazy brownish solution. To this solution, 76 g of T3P (**9**, R¹=n-propyl) as a 50% solution in acetonitrile (120 mmol) was added at -8 to -3°C over 20 minutes and the mixture was stirred at -5°C for 1.5 h.

The mixture was mixed with 200 ml of water and the layers were separated after 10 minutes of stirring at 25°C. The organic layer was washed with 200 ml of water. The organic layer was evaporated to dryness (600 - 50 mbar) affording 49 g of a dark brown oily residue of crude **6** (O-PG-O = (*S*)-pinanediol). It was mixed with 100 ml of n-heptane and evaporated to dryness (300 - 50 mbar) affording 40 g of **6** (O-PG-O = (*S*)-pinanediol) (79 mmol, 99 % yield, 98% purity) as a light brown solid residue.

## Claims

1. A process for preparing Ixazomib of formula **1**, its trimer **1**.trimer, Ixazomib citrate derivatives **2**, wherein n=0 or 1, m=0 or 1 and n+m=1, comprising at least one amide bond formation step performed in the presence of a cyclic triphosphonic anhydride **9**, wherein R¹ = C₁-C₆ alkyl, preferably n-propyl.

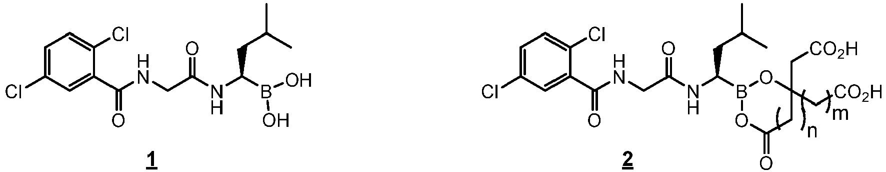

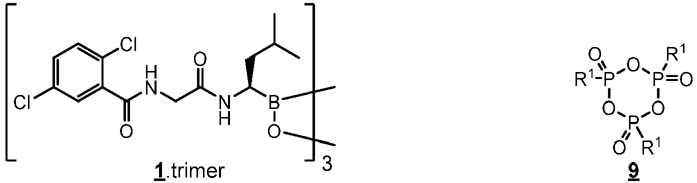

2. A process according to claim 1, wherein the at least one amide bond formation step is the step of coupling compounds **3a** and **7** to form compound 11, 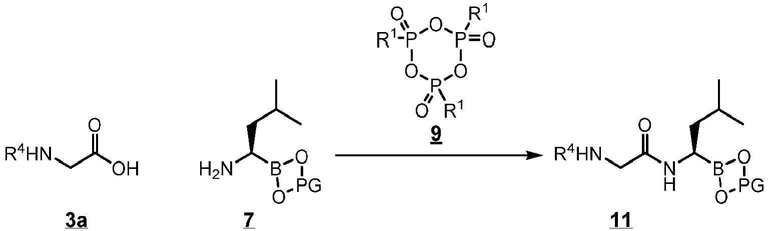 wherein:
R¹ = C₁-C₆ alkyl, preferably n-propyl;
R⁴ = nitrogen protective group or a 2,5-dichlorobenzoyl radical; if R⁴ is a nitrogen protecting group, it is preferably a *tert*.-butyloxycarbonyl (Boc) group; and O-PG-O is a boronate protecting group, preferably a pinanediol group.

3. A process according to claim 1, wherein the at least one amide bond formation step is the step of coupling compounds **3b** and **8** to form compound **12**, 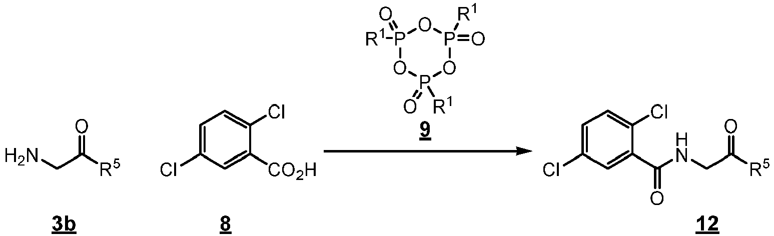 wherein:
R¹ = C₁-C₆ alkyl, preferably n-propyl; and
R⁵ = C₁₋C₄-alkoxy, benzyloxy, or a nitrogen connected 1-amino-3-methylbutylboronic acid ester.

4. A process according to claim 1 comprising the step of coupling compounds **3a** and **7** to form compound **11** according to claim 2 and the step of coupling compounds **3b** and **8** to form compound **12** according to claim 3.

5. The process according to any of the previous claims executed in the presence of a nitrogen base, preferably a tertiary nitrogen base, most preferably N-methylmorpholine.

6. The process according to any of the previous claims executed in an aliphatic, cyclic or aromatic C₆-C₁₀ hydrocarbon or a C₁-C₄ halogenated solvent, preferably a C₁-C₄ halogenated solvent, more preferably chloroform, dichloromethane, 1,2-dichloroethane or 1,1,1-trichloroethane, most preferably dichloromethane.

7. The process according to claims 2-6 wherein the amide coupling reactions comprising reacting compounds **3a** and **7** or compounds **3b**, with R⁵ being a nitrogen connected 1-amino-3-methylbutylboronic acid ester, and **8** are executed at a temperature between - 20 and 0°C, preferably at a temperature between -10 and 0°C, most preferably between -5 and 0°C.

8. The process according to claims 3-6 wherein the amide coupling reactions comprising reacting compounds **3b**, with R⁵ being a C₁₋C₄-alkoxy or benzyloxy, and **8** is executed at a temperature between 0 and 25°C, preferably at a temperature between 0 and 10°C, most preferably 0-5°C.

## Patentansprüche

1. Verfahren zum Herstellen von Ixazomib der Formel **1**, seines Trimers **1**.trimer, Ixazomibcitrat-Derivaten **2**, wobei n=0 oder 1, m=0 oder 1, und n+m=1,
das mindestens einen Amidbindungsbildungsschritt umfasst, der in der Gegenwart eines cyclischen Triphosphonsäureanhydrids 9 durchgeführt wird, wobei R¹ = C₁-C₆-Alkyl, bevorzugt n-Propyl.

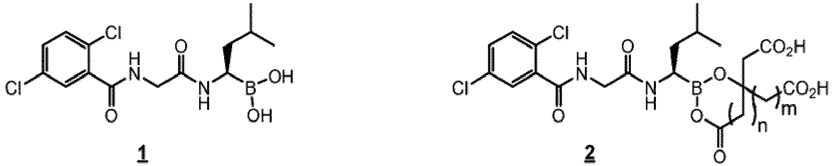

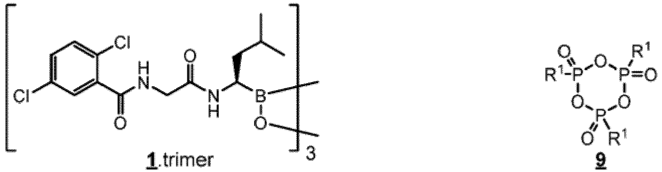

2. Verfahren nach Anspruch 1, wobei der mindestens eine Amidbindungsbildungsschritt der Schritt des Kuppelns von Verbindungen **3a** und **7** ist, um Verbindung **11** zu bilden, 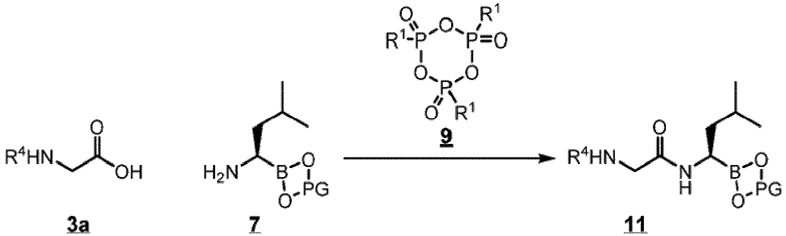 wobei:
R¹ = C₁-C₆-Alkyl, bevorzugt n-Propyl;
R⁴ = Stickstoffschutzgruppe oder ein 2,5-Dichlorbenzoyl-Radikal; wenn R⁴ eine Stickstoffschutzgruppe ist, ist sie bevorzugt eine *tert*.-Butyloxycarbonyl (Boc)-Gruppe; und O-PG-O ist eine Boronatschutzgruppe, bevorzugt eine Pinandiol-Gruppe.

3. Verfahren nach Anspruch 1, wobei der mindestens eine Amidbindungsbildungsschritt der Schritt des Kuppelns von Verbindungen **3b** und **8** ist, um Verbindung **12** zu bilden, 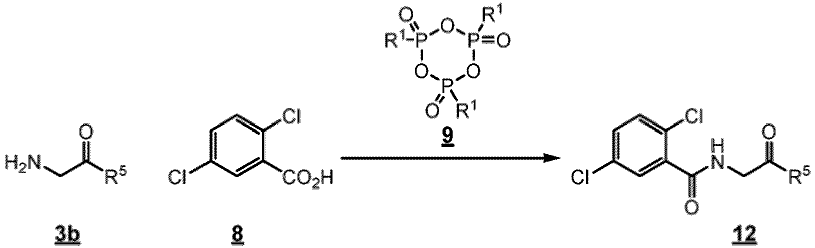 wobei:
R¹ = C₁-C₆-Alkyl, bevorzugt n-Propyl; und
R⁵ = C₁-C₄-Alkoxy, Benzyloxy, oder ein stickstoffverbundener 1-Amino-3-Methylbutylboronsäureester.

4. Verfahren nach Anspruch 1, das den Schritt des Kuppelns von Verbindungen **3a** und **7,** um Verbindung **11** gemäß Anspruch 2 zu bilden, und den Schritt des Kuppelns von Verbindungen **3b** und **8,** um Verbindung **12** gemäß Anspruch 3 zu bilden, umfasst.

5. Verfahren nach einem beliebigen der voranstehenden Ansprüche, ausgeführt in Gegenwart einer Stickstoffbase, bevorzugt einer tertiären Stickstoffbase, am stärksten bevorzugt N-Methylmorpholin.

6. Verfahren nach einem beliebigen der voranstehenden Ansprüche, ausgeführt in einem aliphatischen, zyklischen oder aromatischen C₆-C₁₀-Kohlenwasserstoff oder einem C₁-C₄-halogenierten Lösungsmittel, bevorzugt einem C₁-C₄-halogenierten Lösungsmittel, stärker bevorzugt Chloroform, Dichlormethan, 1,2-Dichlorethan oder 1,1,1-Trichlorethan, am stärksten bevorzugt Dichlormethan.

7. Verfahren nach Ansprüchen 2-6, wobei die Amid-Kupplungsreaktionen, die das Umsetzen von Verbindungen **3a** und **7** oder Verbindungen **3b,** wobei R⁵ ein stickstoffgebundener 1-Amino-3-methylbutylboronsäureester ist, und **8** umfassen, bei einer Temperatur zwischen -20 und 0°C, bevorzugt bei einer Temperatur zwischen -10 und 0°C, am stärksten bevorzugt zwischen -5 und 0°C, durchgeführt werden.

8. Verfahren nach Ansprüchen 3-6, wobei die Amid-Kupplungsreaktionen, die das Umsetzen von Verbindungen **3b,** wobei R⁵ ein C₁-C₄-Alkoxy oder Benzyloxy ist, und **8** umfassen, bei einer Temperatur zwischen 0 und 25°C, bevorzugt bei einer Temperatur zwischen 0 und 10°C, am stärksten bevorzugt 0-5°C durchgeführt werden.

## Revendications

1. Procédé pour préparer de l'ixazomib de formule **1**, son trimère **1**.trimère, les dérivés citrates d'ixazomib **2**, dans lesquels n = 0 ou 1, m = 0 ou 1 et n+m = 1,
comprenant au moins une étape de formation de liaison amide mise en œuvre en présence d'un anhydride triphosphonique cyclique **9** dans lequel R¹ = alkyle en C₁ à C₆, de préférence n-propyle,

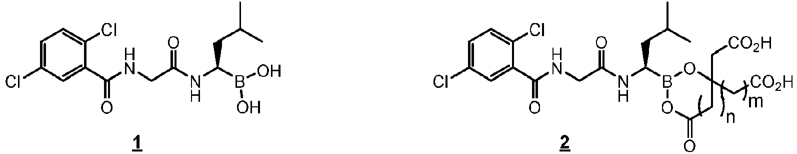

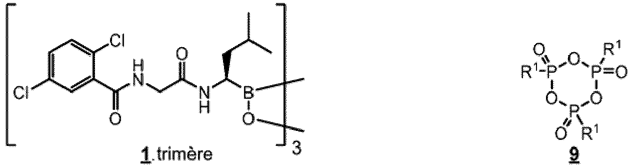

2. Procédé selon la revendication 1, dans lequel l'au moins une étape de formation de liaison amide est une étape de couplage des composés **3a** et **7** pour former le composé **11**, 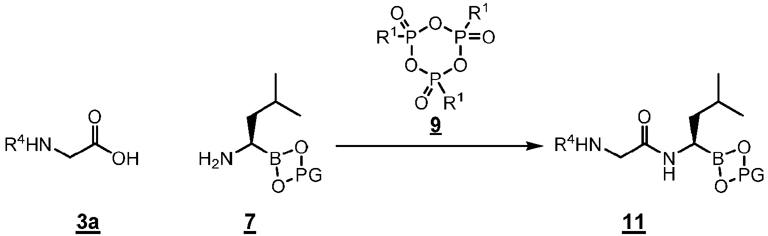 dans lequel :
R¹ = alkyle en C₁ à C₆, de préférence n-propyle ;
R⁴ = groupe protecteur d'azote ou un radical 2,5-dichlorobenzoyle ; si R⁴ est un groupe protecteur d'azote, il est de préférence un groupe *tert*-butyloxycarbonyle (Boc) ; et
O-PG-O est un groupe protecteur de boronate, de préférence un groupe pinanediol.

3. Procédé selon la revendication 1, dans lequel l'au moins une étape de formation de liaison amide est une étape de couplage des composés **3b** et **8** pour former le composé **12**, 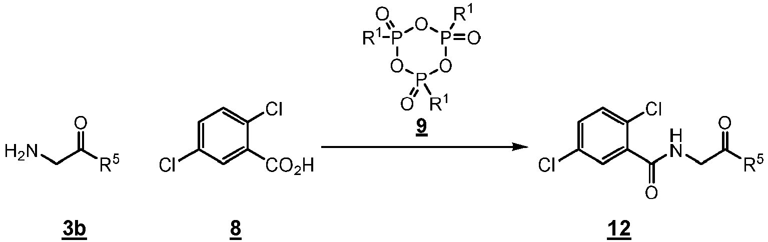 dans lequel :
R¹ = alkyle en C₁ à C₆, de préférence n-propyle ; et
R⁵ = alcoxy en C₁ à C₄, benzyloxy, ou un ester d'acide 1-amino-3-méthylbutylboronique connecté à un azote.

4. Procédé selon la revendication 1, comprenant l'étape de couplage des composés **3a** et **7** pour former le composé **11** selon la revendication 2 et l'étape de couplage des composés **3b** et **8** pour former le composé **12** selon la revendication 3.

5. Procédé selon l'une quelconque des revendications précédentes, exécuté en présence d'une base azotée, de préférence une base azotée tertiaire, plus préférablement encore la N-méthylmorpholine.

6. Procédé selon l'une quelconque des revendications précédentes, exécuté dans un solvant aliphatique, cyclique ou aromatique hydrocarboné en C₆ à C₁₀ ou halogéné en C₁ à C₄, de préférence un solvant halogéné en C₁ à C₄, plus préférablement le chloroforme, le dichlorométhane, le 1,2-dichloroéthane ou le 1,1,1-trichloroéthane, encore plus préférablement le dichlorométhane.

7. Procédé selon les revendications 2 à 6, dans lequel les réactions de couplage d'amine comprenant la réaction des composés **3a** et **7** ou des composés **3b**, où R⁵ est un ester d'acide 1-amino-3-méthylbutylboronique connecté à un azote, et **8**, sont exécutées à une température comprise entre -20 et 0°C, de préférence à une température comprise entre -10 et 0°C, encore plus préférablement entre -5 et 0°C.

8. Procédé selon les revendications 3 à 6, dans lequel la réaction de couplage d'amine comprenant la réaction des composés **3b**, où R⁵ est un alcoxy en C₁ à C₄ ou benzyloxy, et **8**, est exécutée à une température comprise entre 0 et 25°C, de préférence à une température comprise entre 0 et 10°C, plus préférablement encore de 0 à 5°C.
